**Europäisches Patentamt**

**European Patent Office**

**Office européen des brevets**

(11) Veröffentlichungsnummer: **0 178 403**
**A2**

# (12) EUROPÄISCHE PATENTANMELDUNG

(21) Anmeldenummer: **85109663.6**

(22) Anmeldetag: **01.08.85**

(51) Int. Cl.⁴: **H 04 M 1/274**

(30) Priorität: **19.10.84 DE 3438292**

(43) Veröffentlichungstag der Anmeldung:
**23.04.86 Patentblatt 86/17**

(84) Benannte Vertragsstaaten:
**BE GB IT LU**

(71) Anmelder: **Telefonbau und Normalzeit GmbH**
**Mainzer Landstrasse 128-146 Postfach 4432**
**D-6000 Frankfurt (Main)(DE)**

(72) Erfinder: **Hutt, Hans**
**Poppstrasse 5**
**D-7336 Uhingen(DE)**

(54) Verfahren zur Direktanwahl von Teilnehmeranschlüssen in Fernmelde-, insbesondere Fernsprechvermittlungsanlagen.

(57) Das erfindungsgemäße Verfahren sieht vor, daß bei einem Eingabe- und Anzeigegerät nach der Eingabe weniger Buchstaben eines Namens oder einer Anschlußbezeichnung oder nach der Eingabe weniger Ziffern einer Rufnummer der betreffende Teil eines Anschlußverzeichnisses auf der gesamten Anzeigefläche erscheint. Dabei ist jede einzelne Anschlußbezeichnung innerhalb einer Anzeigeteilfläche angeordnet, die in Abhängigkeit davon, ob der betreffende Anschluß frei oder besetzt, bzw. der Teilnehmer vermutlich abwesend ist oder nicht unterschiedlich gestaltet ist. Beim Berühren einer Anzeigeteilfläche, die den Frei- und Anwesenheitszustand signalisiert, wird direkt eine Verbindung zu diesem Anschluß hin durch Ausgabe einer Rufnummer oder Anschlußlage aufgebaut. Beim Berühren einer den Besetzt- oder Abwesensheitszustand signalisierenden Anzeigeteilfläche erfolgt eine neue Anzeige, wobei auf einem Teil der gesamten Anzeigefläche nähere Angaben über die Art des Besetztzustandes bzw. der Abwesenheit mitgeteilt werden und außerdem auf dem Rest der Anzeigefläche als Ersatz anrufbare Anschlüsse auf Anzeigeteilflächen angeboten werden. Die für diese Anzeige benötigte Information wird entweder von einer externen Datenverarbeitungsanlage zugeführt, oder ist in einem im Gerät selbst enthaltenen Personalcomputer eingespeichert.

Fig. 1

Telefonbau und Normalzeit GmbH, 6000 Frankfurt am Main,
Mainzer Landstrasse 128 - 146


**Verfahren zur Direktanwahl von Fernmelde-, insbesondere
Fernsprechvermittlungsanlagen**


Die Erfindung betrifft ein Verfahren zur Direktanwahl von
Teilnehmeranschlüssen von Fernmelde-, insbesondere Fernsprechvermittlungsanlagen, wie dies im Oberbegriff des
Patentanspruches 1 näher bezeichnet ist.

Aus der DE-AS 29 07 811 ist eine Funktionseingabeeinheit mit Berührungstasten bekannt, wobei auf der Oberfläche
von Anzeigeeinrichtungen Kontaktflächen angeordnet sind,
bei deren Berührung eine Funktion ausgelöst wird. Die
Kontaktflächen sind dabei so angeordnet, daß einzelne Bereiche der Anzeigeeinheit einzelnen Tastenfunktionen zugeordnet sind. Wie aus den Zeichnungen und der Beschreibung
hervorgeht, kann bei Berührung von Kontaktflächen eine
Funktion ausgelöst werden, die mit der jeweiligen Anzeige
in Zusammenhang zu bringen ist. Wenn derartige Kontaktflächen auf die Oberfläche einer Anzeigeeinrichtung aufgebracht sind, so müssen diese so transparent sein, daß die
Anzeige dadurch nicht beeinträchtigt wird.

Es ist außerdem bekannt, bei Bildschirmen Tastfelder vorzusehen, die mit Hilfe voneinander gegenüberliegenden Leuchtdioden- und Fototransistorreihen gebildet werden. Ein
derartiges System ist beschrieben im "Genschow, Technischer
Informationsdienst", Auslandsschnellbericht 19-1983 Ausgabe B
vom 19.5.1983. Hierbei werden aus Lichtschranken bestehende
Koordinatenfelder gebildet. Bei Berührung des Bildschirmes

0178403

werden die an der betreffenden Stelle befindlichen Lichtschranken unterbrochen, wodurch es möglich wird, die Berührungsposition auf dem Schirm genau zu ermitteln. Die dabei
sich ergebeneden X- und Y-Achseninformationen geben genaue
Auskunft über die Stelle, die berührt worden ist. Dabei kommt
es nicht darauf an, daß die Oberfläche des Bildschirmes
tatsächlich berührt wird, sonderen es genügt, eine Unterbrechung der Lichtschranken zu bewirken.

Dem vorstehend beschriebenen Stand der Technik entsprechend
ist es Aufgabe der Erfindung, ein Verfahren vorzustellen,
womit eine Direktanwahl von Teilnehmeranschlüssen von
Fernmelde-, insbesondere Fernsprechvermittlungsanlagen
möglich ist, ohne daß die vollständige Anschlußbezeichnung
bekannt sein muß oder in einem Verzeichnis nachzuschlagen ist.
Diese Aufgabe wird durch Merkmalskombinationen gelöst, wie
sie im Patentanspruch 1 angegeben sind.

Damit wird in vorteilhafter Weise erreicht, daß das Aufsuchen
von Rufnummern oder Anschlußbezeichnungen völlig entfällt
und die Anwahl eines Teilnehmers mit wenigen einfachen
Handgriffen direkt möglich ist. Außerdem werden zusätzliche
Informationen über den gewünschten Teilnehmer-Anschluß angezeigt, und Ersatzanschlüsse zur direkten Anwahl angeboten,
falls der gewünschte Teilnehmer nicht erreichbar ist. Der
damit erreichte Komfort bei der Anwahl von Teilnehmern
geht weit über das bei normaler Benutzung erreichbare Maß
hinaus. Weiterbildungen der Erfindung ergeben sich aus den
Unteransprüchen.

Ein Ausführungsbeispiel der Erfindung wird nachfolgend
anhand von Zeichnungen näher erläutert.
Es zeigt
Fig. 1 das Anschlußschema eines Eingabe- und Anzeigegerätes
    zur Durchführung des erfindungsgemäßen Verfahrens,
Fig. 2 eine in der Praxis nicht auftretende Zusammenstellung
    möglicher Anzeigen.

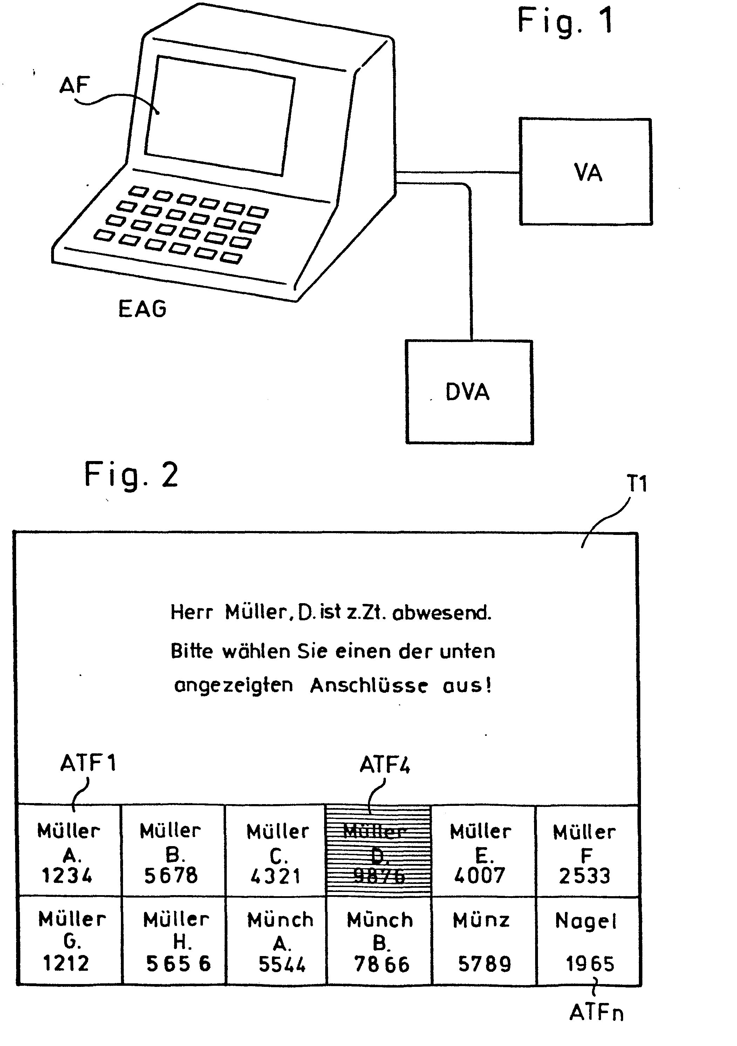

In der Fig. 1 ist ein Eingabe- und Anzeigegerät EAG dargestellt, das mit einer Vermittlungsanlage VA und einer Datenverarbeitungsanlage DVA verbunden ist. Es ist zweckmäßig, für diese Anschlüsse Modems vorzusehen, um einen schnellen Datenaustausch zu ermöglichen. Das Eingabe- und Anzeigegerät EAG enthält als wesentliche Bestandteile eine Anzeigefläche AF und eine schematisch angedeutete Tastatur und kann beliebig einem Fernmelde-, insbesondere Fernsprechanschluß zugeordnet werden.

mit einer Datenverarbeitungsanlage Die Verbindung des Eingabe- und Anzeigegerätes EAG kann entfallen, wenn wie dies im Patentanspruch 5 beschrieben ist, das Eingabe- und Anzeigegerät EGA einen eigenen integrierten Personalcomputer enthält. Damit wird das Eingabe- und Anzeigegerät EAG unabhängig von einer zentralen Datenverarbeitungsanlage DVA. Der Benutzer muß dann allerdings die für ihn wichtigen, die anwählbaren Teilnehmer betreffenden Daten selbst eingeben oder anderweitig dafür sorgen, daß das Eingabe- und Anzeigegerät EAG immer auf dem neuesten Stand ist.

Wenn das Eingabe- und Anzeigegerät EAG, wie dies im Patentanspruch 8 beschrieben ist, in ein an die Vermittlungsanlage VA angeschlossenes Endgerät eingebaut ist, so kann sich auch ein mit Modems betriebener besonderer Anschluß zur Vermittlungsanlage VA erübrigen, weil dann auch die Möglichkeit besteht, die vom Eingabe- und Anzeigegrät EAG erzeugte Wahlinformation über die normale Anschlußleitung zur Vermittlungsanlage VA abzugeben. Die Wahlinformation muß dann allerdings in dem für den betreffenden Anschluß vorgesehenen Wahlverfahren an die Vermittlungsanlage VA abgegeben werden. Zu diesem Zweck ist dann den am weitesten verbreiteten Wahlverfahren entsprechend entweder ein Impulssender oder ein Mehrfrequenz-Code-Sender vorzusehen. Um die von der Vermittlungsanlage VA rückwärts übertragenen Verbindungszustände (frei, besetzt) auswerten zu können, sind dann Hörtonerkenner erforderlich. Eine derartige Ausführungsform des Eingabe- und Anzeigegerätes EAG kann trotz des zusätzlichen Aufwandes zweckmäßig sein, weil dann keine besondere Verbindung zur Vermittlungsanlage VA notwendig ist.

Anhand der Fig. 2 wird nun im einzelnen beschrieben, wie das erfindungsgemäße Verfahren ausgeführt wird. Um eine Direktanwahl von Teilnehmeranschlüssen einzuleiten, wird mit der Eingabetastatur des Eingabe- und Anzeigegerätes EAG der Beginn einer Anschlußbezeichnung eingegeben, wozu ein bis zwei Tastendrücke erforderlich sind. Das Eingabe- und Anzeigegerät EAG setzt daraufhin eine Meldung an die Datenverarbeitungsanlage DVA ab, um eine auf der Anzeigefläche AF darzustellende Auswahl von in Frage kommenden Teilnehmeranschlüssen anzufordern. Aufgrund einer solchen Anforderung überträgt die Datenverarbeitungsanlage DVA so viele Anschlußdaten von in Frage kommenden Teilnehmeranschlüssen, wie Anzeigeteilflächen ATF auf der gesamten Anzeigefläche AF vorgesehen sind. Es kann sich dabei beispielsweise um diejenige Seite eines Telefonverzeichnisses handeln, wo die mit der zuvor gemachten Eingabe bezeichnete Anschlußgruppe dargestellt ist. Auf der gesamten Anzeigefläche AF erscheint daraufhin in jeder einzelnen Anzeigeteilfläche ATF ein mit der durch die Eingabe bestimmten Kennzeichen beginnender Teilnehmeranschluß. Es wird also nicht wie in der Fig. 2 dargestellt nur ein Teil der Anzeigefläche für diese Anzeige benutzt, sondern die gesamte Anzeigefläche AF bildet soviele zur Direktanwahl ausgewählte Teilnehmeranschlüsse an, wie Anzeigeteilflächen ATF vorhanden sind.

Bei der von der Datenverarbeitungsanlage DVA übertragenen Anzeigeinformation sind außerdem besondere Kennzeichen enthalten, wenn von einem Anschlußinhaber bekannt ist, daß dieser abwesend ist. Falls derartige Informationen für einen Teilnehmeranschluß vorliegen, wird die betreffende Anzeigeteilfläche ATF4 in besonderer Weise, beispielsweise mit Negativdruck abgebildet. Der Benutzer erkennt daran, daß dieser Teilnehmer nicht erreichbar ist.

Außerdem ist das Eingabe- und Anzeigegerät EAG in der Lage, die Frei- und Besetztzustände der betreffenden Teilnehmeranschlüsse bei der Vermittlungsanlage VA abzufragen, ohne daß zunächst eine Verbindung aufgebaut wird. Diese Anforderungen können entsprechend dem in den Anzeigeteilflächen ATF dar-

0178403

gestellten Anschlußbezeichnungen einzeln nacheinander an die Vermittlungsanlage abgegeben werden. Die daraufhin von der Vermittlungsanlage VAG zum Eingabe- und Anzeigegerät EAG übertragenen Meldungen führen dann dazu, daß beispielsweise die Anzeigeteilfläche ATF eines besetzten Teilnehmers flackert. Somit ist der Benutzer des Eingabe- und Anzeigegerätes EAG durch die Ausgestaltung einer jeden einzelnen Anzeigeteilfläche ATF auf der gesamten Anzeigefläche AF über den Betriebszustand des Anschlusses und auch über die evtl. Abwesenheit eines zur Auswahl stehenden Teilnehmers genau unterrichtet.

Falls ein Telefonverzeichnis so umfangreich sein sollte, daß mit der zu Beginn der Prozedur vorgenommenen Auswahl durch Eintasten von ein bis zwei Zeichen nicht alle in Frage kommenden Anschlußbezeichnungen auf der gesamten Anzeigefläche AF untergebracht werden können, so besteht die Möglichkeit durch Eingabe eines besonderen Signals die im Telefonverzeichnis folgende Teilnehmergruppe zur Anzeige zu bringen. Der Benutzer des Eingabe- und Anzeigegerätes kann bei jeder Anzeige leicht feststellen, ob der von ihm gewünschte Anschluß in einer der Anzeigeteilfläche ATF dargestellt ist. Die Direktanwahl des Teilnehmers wird dann eingeleitet, indem die betreffende Anzeigeteilfläche ATF berührt wird.

Durch die Berührung einer Anzeigeteilfläche ATF, die den Freizustand eines Anschlusses, bzw. die Anwesenheit eines Teilnehmers signalisiert, wird unmittelbar eine Verbindung zu diesem Teilnehmer aufgebaut, indem das Eingabe- und Anzeigegerät der Vermittlungsanlage VA direkt die betreffende Anschlußbezeichnung, beispielsweise die Rufnummer übermittelt. Damit ist für diesen Fall der Vorgang einer Direktanwahl von Teilnehmeranschlüssen abgeschlossen, weil nur noch die Meldung dieses Teilnehmers in der mit dem betreffenden Endgerät hergestellten Verbindung abgewartet werden muß.

Wird dagegen eine Anzeigeteilfläche ATF berührt, die nicht den Frei- oder Anwesenheitszustand signalisiert, so erfolgt eine neue Anzeige im Anzeigefeld AF, wobei dieses wie in der Fig. 2 dargestellt, aufgeteilt ist. Dabei werden auf einem Teil T1 der gesamten Anzeigefläche AF nähere Angaben über die Art der Abwesenheit gemacht. Ebenso kann auch im Falle des Besetztzustandes angezeigt werden, welche weiteren Möglichkeiten für den Benutzer des Eingabe- und Anzeigegerätes EAG bestehen, oder auch nicht gegeben sind. Die Anzeigeteilflächen ATF, die sich im Bereich des Teiles T1 befinden, sind bei dieser Art von Anzeige außer Kraft gesetzt, so daß eine Berührung der betreffenden Stelle keine Wirkung hat. Auf dem restlichen Teil der gesamten Anzeigefläche AF werden in den verbleibenden Anzeigeteilflächen ATF ersatzweise in Frage kommende Anschlüsse angezeigt. Dabei kann selbstverständliche wie vorher beschrieben auch deren Zustand angegeben werden. Es ist dabei aber nicht so, wie in der Fig. 2 dargestellt, daß eine bestimmte Reihenfolge dieser anzuzeigenden Anschlußbezeichnungen eingehalten werden muß. Die ersatzweise angebotenen Anschlußbezeichnungen können vielmehr beliebig ausgewählt sein, so wie sie in der Datenverarbeitungsanlage DVA dem jeweils zuvor ausgewählten Anschluß als Ersatz- Alternativen zugeordnet sind. Bei diesen ersatzweise angebotenen Anschlußbezeichnungen handelt es sich selbstverständlich um Teilnehmer, die mit dem ursprünglich gewünschten Teilnehmer in igrendeiner Weise zusammenarbeiten. Bei der Berührung einer Anzeigeteilfläche ATF, in der ein Ersatzanschluß bezeichnet ist, wird in gleicher Weise verfahren, wie es vorher beschrieben ist.

Bei der näheren Bezeichnung des Besetztzustandes im dafür vorgesehenen Teil T1 der Anzeigefläche AF kann beispielsweise angegeben sein, daß der gewünschte Teilnehmer selbst oder sein Gesprächspartner eine Klassifizierung hat, wobei eine Aufschaltung verhindert ist. Es könnte außerdem angegeben werden, ob der gewünschte Teilnehmer gerade ein Ferngespräch oder ein Interngespräch führt. Der Benutzer des Eingabe- und Anzeigegerätes EAG kann anhand der angezeigten Information entscheiden, ob er aufgrund der für seinen Anschluß gegebenen Möglichkeiten die Verbindung unbedingt zustande bringen will, oder ob er den Anruf zu einem späteren Zeitpunkt wiederholen kann, oder ob er einen der Ersatzanschlüsse ansteuern will.

Neben der in Fig. 1 dargestellten Konfiguration gibt es, wie bereits am Beginn der Beschreibung erwähnt, auch vereinfachte Möglichkeiten des Betriebes eines Eingabe- und Anzeigegerätes EAG. So ist es beispielsweise möglich, auf den Anschluß mit einer Datenverarbeitungsanlage DVA zu verzichten, wenn entsprechende Speichermittel beispielsweise in Gestalt eines Personalcomputers im Eingabe- und Anzeigegerät EAG selbst vorhanden sind. Ein Nachteil besteht jedoch darin, daß alle Anschlußdaten mit den zugehörigen zusätzlichen Informationen individuell eingegeben werden und auf aktuellem Stand gehalten werden müssen. Hierbei können jedoch moderne Datenträger, beispielsweise Bandkassetten nützlich sein, so daß die Eingabe oder Aktualisierung von Teilnehmerdaten nicht allzuviel Aufwand bedeutet. Als zusätzlicher Vorteil ergibt sich jedoch, daß individuelle Anschlußbezeichnungen, auch von Anschlüssen, die nicht an der gleichen Vermittlungsanlage VA angeschlossen sind wie das Eingabe- und Anzeigegerät EAG eingebbar sind, so daß auch solche Anschlüsse mit der gleichen einfachen Bedienungsweise erreichbar sind. Bei externen Anschlüssen ist es allerdings nicht möglich, den Frei- oder Besetztzustand vorab zu erfahren. Dagegen ist eine Abwesenheitsanzeige ohne weiteres möglich, wenn diese vorher eingespeichert wurde. Ebenso sind bei externen Anschlußbezeichnungen Ersatzalternativen einspeicherbar. Selbstverständlich sind auch externe Anschlüsse, beispielsweise von häufig verlangten Dienstanschlüssen wie Zweigniederlassungen in die Datenverarbeitungsanlage DVA eingebbar, jedoch sind diese dann für alle Eingabe- und Anzeigegeräte zugänglich und sind dann allgemein in das gesamte Anschlußverzeichnis mit aufgenommen.

Wenn ein Eingabe- und Anzeigegerät EAG in ein Fernmeldeendgerät integriert ist, so läßt sich, wie bereits eingangs erwähnt, auch der zusätzliche Anschluß an die Vermittlungsanlage VA einsparen. Ein derartiges Endgerät mit integriertem Eingabe- und Anzeigegerät EAG kann also ohne weiteres nur über die normale Anschlußleitung betrieben werden, wenn
es einen Personalcomputer enthält und die Wahlinformation
in der Weise abgibt, wie es für die Anschlußleitung vorgesehen ist. In allen Fällen bietet eine derartige Verfahrensweise dem Benutzer einen erheblichen Komfort bei der
direkten Anwahl von Teilnehmeranschlüssen von Fernmelde-,
insbesondere Fernsprechvermittlungsanlagen.

P 3920
Gö/we
5.10.84

Telefonbau und Normalzeit GmbH, 6000 Frankfurt am Main,
Mainzer Landstrasse 128 - 146

Verfahren zur Direktanwahl von Teilnehmeranschlüssen
in Fernmelde-, insbesondere Fernsprechvermittlungsanlagen

P a t e n t a n s p r ü c h e

1. Verfahren zur Direktanwahl von Teilnehmeranschlüssen von
Fernmelde-, insbesondere Fernsprechvermittlungsanlagen,
wobei ein Eingabe- und Anzeigegerät mit einer in mehrere
Teilflächen unterteilbaren Anzeigeflächen vorgesehen ist,
und jeder Teilfläche eine durch direkte Berührung auslösbare Funktion zugeordnet ist, und wobei die jeweils
auszulösende Funktion von der Art der auf der betreffenden
Teilfläche erscheinenden Anzeige abhängig ist,
dadurch gekennzeichnet,
daß nach der Eingabe weniger Buchstaben eines Namens
oder einer Anschlußbezeichnung oder nach der Eingabe
weniger Ziffern einer Rufnummer der betreffende Teil
eines Anschlußverzeichnisses auf der gesamten Anzeigefläche (AF) erscheint, wobei jede einzelne Anschlußbezeichnung innerhalb einer Anzeigeteilfläche (ATF) angeordnet ist, daß in jeder einzelnen Anzeigeteilfläche (ATF)
in Abhängigkeit davon, ob der betreffende Anschluß frei
oder besetzt, bzw. der Teilnehmer vermutlich anwesend
ist oder nicht, die Anzeige unterschiedlich (Blinken,
Negativdruck) gestaltet ist,
daß beim Berühren einer Anzeigeteilfläche (ATF) die den
Frei- und Anwesenheitszustand signalisiert, direkt eine
Verbindung zu diesem Anschluß durch Ausgabe einer Rufnummer oder Anschlußlage bewirkt wird, und daß beim

- 2 -

0178403

Berühren einer den Besetzt- oder Abwesenheitszustand signalisierenden Anzeigeteilfläche (ATF4) auf einem Teil (T1) der gesamten Anzeigefläche (AF) nähere Angaben über die Art des Besetztzustandes bzw. der Abwesenheit mitgeteilt werden, und dann auf dem Rest der Anzeigefläche (AF) als Ersatz anrufbare Anschlüsse auf Anzeigeteilflächen (ATF) angeboten werden.

2. Verfahren nach Anspruch 1,
dadurch gekennzeichnet,
daß das für die Direktanwahl vorgesehene Eingabe- und Anzeigegerät (EAG) über mit Modems ausgestattete Schnittstellen mit der Vermittlungsanlage (VA) und mit einer Datenverarbeitungsanlage (DVA) verbunden ist.

3. Verfahren nach Anspruch 2,
dadurch gekennzeichnet,
daß die Information über die Frei- und Besetztzustände von der Vermittlungsanlage (VA) zum Eingabe- und Anzeigegerät (EAG) übertragen wird.

4. Verfahren nach Anspruch 2,
dadurch gekennzeichnet,
daß die Information über die Art der Abwesenheit von einer für Personalwesen und/oder Gleitzeiterfassung eingesetzten Datenverarbeitungsanlage (DVA) zum Eingabe- und Anzeigegerät (EAG) übertragen wird.

5. Verfahren nach Anspruch 4,
dadurch gekennzeichnet,
daß die Information über die Art der Abwesenheit in einem im Eingabe- und Anzeigegerät (EAG) integrierten Personalcomputer eingebbar ist.

6. Verfahren nach Anspruch 1,
dadurch gekennzeichnet,
daß während der Anzeige von näheren Angaben über Besetztzustände und/oder Abwesenheitsgründe die Berührungszonen der in diesem Teil (T1) der Anzeigefläche (AF) befindlichen Anzeigeteilflächen (ATF) wirkungslos geschaltet sind.

**0178403**

7. Anordnung zur Durchführung des Verfahrens nach Anspruch 1;
dadurch gekennzeichnet,
daß das Eingabe- und Anzeigegerät (EAG) als Zusatzgerät einem an die Vermittlungsanlage (VA) angeschlossenen
Endgerät, z.B. Fernsprechapparat oder Vermittlungsplatz
zugeordnet ist.

8. Anordnung zur Durchführung des Verfahrens nach Anspruch 1,
dadurch gekennzeichnet,
daß das Eingabe- und Anzeigegerät (EAG) in ein an die
Vermittlungsanlage (VA) angeschlossenes Endgerät eingebaut ist.

P 3920
Gö/we -
3.10.84

1|1

# Fig. 1

AF

EAG

VA

DVA

# Fig. 2

T1

Herr Müller, D. ist z.Zt. abwesend.
Bitte wählen Sie einen der unten
angezeigten Anschlüsse aus!

ATF1                                  ATF4

| Müller A. 1234 | Müller B. 5678 | Müller C. 4321 | Müller D. 9876 | Müller E. 4007 | Müller F 2533 |
| Müller G. 1212 | Müller H. 5656 | Münch A. 5544 | Münch B. 7866 | Münz 5789 | Nagel 1965 |

ATFn